Europäisches Patentamt

European Patent Office

Office européen des brevets

(19)

(11) Veröffentlichungsnummer: **0 243 575 B1**

(12) **EUROPÄISCHE PATENTSCHRIFT**

(45) Veröffentlichungstag der Patentschrift:
06.06.90

(21) Anmeldenummer: 87100394.3

(22) Anmeldetag: 14.01.87

(51) Int. Cl.⁵: **F28F 9/18**, F28F 21/06, B29C 65/02

(54) Wärme- und/oder Stoffaustauscher und Verfahren zum Herstellen von Wärme- und/oder Stoffaustauscher.

(30) Priorität: 28.04.86 DE 3614342

(43) Veröffentlichungstag der Anmeldung:
04.11.87 Patentblatt 87/45

(45) Bekanntmachung des Hinweises auf die Patenterteilung:
06.06.90 Patentblatt 90/23

(84) Benannte Vertragsstaaten:
AT BE CH DE ES FR GB GR IT LI LU NL SE

(56) Entgegenhaltungen:
DE-A- 1 209 725
DE-A- 2 603 615
DE-A- 3 338 157
FR-A- 1 135 923
US-A- 2 433 546
US-A- 3 462 362

H. DOMININGHAUS: "Die Kunststoffe und ihre Eigenschaften", 1971, VDI-Verlag, Düsseldorf, DE

(73) Patentinhaber: AKZO N.V., Velperweg 76, NL-6824 BM Arnhem(NL)

(72) Erfinder: Gemeinhardt, Hermann, Rosenstrasse 32, D-8753 Obernburg/Main(DE)

(74) Vertreter: Fett, Günter, Akzo Patente GmbH Kasinostrasse 19 - 23, D-5600 Wuppertal 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft einen Wärme- und/oder Stoffaustauscher, bestehend aus mindestens einer Gruppe von Rohren aus thermoplastischem Kunststoff, bei dem die Enden der Rohre stirnseitig verschweißt sind. Ebenso betrifft die Erfindung ein Verfahren zum Herstellen solcher Wärme- und/oder Stoffaustauscher.

Die heute bekannten Wärme- und/oder Stoffaustauscher bestehen aus Rohren oder Rohrgruppen, die aus einem nichtporösen bzw. porösem Material bestehen, und die in einen Rohrboden eingebettet sind. Dieser Rohrboden wird entweder getrennt hergestellt, wobei dann die Rohrenden mit dem Rohrboden verbunden werden müssen, oder der Rohrboden wird zum Herstellen des Wärme- und/oder Stoffaustauschers dadurch erzeugt, daß eine Vergußmasse zwischen die Rohrenden eingebracht wird. Die Herstellung solcher Wärme- und/oder Stoffaustauscher ist aufwendig, weil entweder die Rohre in den Rohrboden eingefädelt und positioniert werden müssen, bevor sie mit dem Rohrboden verbunden werden, oder die Rohrenden mit speziellen Vorrichtungen auf Abstand gehalten werden müssen, um die Vergußmasse (selbstaushärtendes Material oder Kunststoffschmelze) zwischen die Rohre einbringen zu können.

Ein derartiger Wärme- und/oder Stoffaustauscher sowie ein Verfahren zu dessen Herstellung ist beispielsweise aus der US 2 433 546 bekannt. Dort werden die Rohre auf eine Zapfenanordnung einer Pressvorrichtung aufgesteckt und an jeweils beiden Enden durch Niederfahren eines Pressenstempels, der eine weitere Zapfenanordnung aufweist, definiert aufgeweitet und miteinander verschweißt.

Aufgabe der vorliegenden Erfindung ist es, einen Wärme- und/oder Stoffaustauscher zur Verfügung zu stellen der einfach herzustellen ist. Außerdem soll der erfindungsgemäße Wärme- und/oder Stoffaustauscher im Bereich des sonst üblichen Rohrbodens sehr kompakt ausgebildet sein. Es ist auch Aufgabe der vorliegenden Erfindung, ein besonders einfach zu bewerkstelligendes Verfahren zur Herstellung dieser Wärme- und/oder Stoffaustauscher zur Verfügung zu stellen.

Diese Aufgabe wird bei einem gattungsgemäßen Wärme- und/oder Stoffaustauscher dadurch gelöst, daß jedes Rohrende einer Gruppe von einer Hülse aus thermoplastischem Kunststoff, die keine Porosität oder höchstens eine Porosität von 20% des Wandvolumens aufweist, umfaßt ist, alle Rohrenden mit Hülsen einer Gruppe von einer zweiten Hülse umfaßt sind, wobei die Hülsen der Rohrenden etwa dieselbe Länge aufweisen wie die zweite Hülse, und daß stirnseitig die Rohrenden jeweils mit dem sie umfassenden Hülsenende, benachbarte Hülsenenden miteinander und außenliegende Hülsenenden mit der zweiten Hülse verschmolzen sind. Ein solcher Wärme- und/oder Stoffaustauscher weist praktisch keinen herkömmlichen Rohrboden mehr auf; die Kombination von Hülsen und Rohrenden macht eine kompakte Anordnung der Rohrenden möglich, ohne daß die am Ende eines Wärme- und/oder Stoffaustauschers erforderliche Festigkeit und Dichtigkeit verloren geht.

Bevorzugt bestehen die die Rohrenden umfassenden Hülsen aus einem thermoplastischen Kunststoff, welcher im Bereich zwischen Raumtemperatur und Schmelztemperatur einen mittleren linearen Ausdehnungskoeffizienten zwischen $100 \times 10^{-6}$ und $400 \times 10^{-6}$ 1/K besitzt.

In der Regel sind die Rohrenden, die die Rohrenden umfassenden Hülsen und die zweite Hülse mindestens bis zu einer Tiefe, die der dünnsten Wandstärke der Rohre entspricht, miteinander verschmolzen.

Sofern der Außenquerschnitt der Hülsen kreisförmigen oder sechseckigen Querschnitt aufweisen, zeichnet sich der erfindungsgemäße Wärme- und/oder Stoffaustauscher besonders dadurch aus, daß der Innenquerschnitt der zweiten Hülse und der Außenquerschnitt der aus Rohrenden und Hülsen bestehenden Gruppe die Form eines Sechsecks aufweist. Allerdings sind für die zweite Hülse alle Querschnittsformen auch geeignet, bei denen die Rohrenden in kompakter Anordnung in die zweite Hülse eingeführt werden können. Jede Röhrengruppe besteht bevorzugt aus 7 bis 141 Röhren und somit auch aus 7 bis 141 Hülsen.

Unter dem Begriff Rohre sind im Sinne der Erfindung zusammengefaßt alle rohrförmigen Körper, wie beispielsweise Rohre, Schläuche oder Hohlfäden. Die Querschnittsform der Rohre ist nicht auf kreisförmige Querschnitte beschränkt; die Rohre können auch elliptischen oder vieleckigen, beispielsweise dreieckigen, viereckigen, quadratischen, fünfeckigen usw. Querschnitt aufweisen. Die Wandstärke der Rohre, die sich aufgrund des Außen- und Innenquerschnitts der Rohre ergibt, kann über den Umfang der Rohre gleich oder unterschiedlich sein. Außen- und Innenquerschnitt der Rohre können dieselbe oder verschiedene Querschnittsform aufweisen. Beispielsweise kann ein Rohr im Außenquerschnitt eine vieleckige Kontur und im Innenquerschnitt eine kreisförmige oder elliptische Kontur aufweisen. Auch kann der Innenquerschnitt der Rohre einen oder mehrere durchgehende Hohlräume aufweisen. Es kann aber auch ein einzelnes Rohr aus mehreren Einzelrohren zusammengesetzt sein. Diese Einzelrohre können beispielsweise achsparallel nebeneinanderliegen und die Achsen auf einer geraden Linie angeordnet sein.

Bevorzugt besteht jede Hülse wie auch die zweite Hülse aus thermoplastischem Polymer, welches zu den Fluorpolymeren gehört. Als weitere bevorzugte Polymerwerkstoffe für die Hülsen wie auch für die zweiten Hülsen kommen Polyäthylen bzw. Polypropylen infrage. Hierbei hat es sich als besonders zweckmäßig erwiesen, wenn Röhrenwerkstoff und Hülsenwerkstoff denselben oder nahezu denselben Schmelzpunkt bzw. Schmelzbereich aufweisen. Zweckmäßig ist es, wenn die Rohre, die Hülsen und die zweiten Hülsen aus thermoplastischen Polymeren bestehen, die von ihrer Grundstruktur zu derselben Polymersorte gehören.

Ein erfindungsgemäßer Wärmeaustauscher zeichnet sich dadurch aus, daß die Rohre eine Porosität von maximal 20% des Wandvolumens aufweisen. Ein erfindungsgemäßer Stoffaustauscher zeichnet sich dadurch aus, daß die Rohre eine Porosität von bis zu 90% des Wandvolumens aufweisen. Ein solcher Stoffaustauscher kann je nach Einsatzzweck zusätzlich auch die Funktion eines Wärmetauschers erfüllen.

Die erfindungsgemäß gestellte Aufgabe wird auch gelöst durch ein Verfahren zum Herstellen eines Wärme- und/oder Stoffaustauschers gemäß der Erfindung, welches sich dadurch auszeichnet, daß jedes Rohrende in jeweils einer Hülse positioniert wird, daß die Rohrenden zumindest einer Seite der Rohre mit den Hülsen zusammengefaßt und derart in der zweiten Hülse positioniert werden, daß die Rohrenden und die Hülsenenden zumindest nahezu vertikal nach oben, mit der zweiten Hülse bündig oder die zweite Hülse bis zu 4 mm überragend angeordnet sind, und Rohrenden und Hülsenenden eine im wesentlichen ebene Fläche bilden, daß dann von oben her den Rohrenden soviel Wärme zugeführt wird, daß die Rohrenden mit den Hülsenenden verschmelzen und die Hülsenenden sich derart erweitern, daß diese sich an die Außenwände benachbarter Hülsen bzw. an die zweite Hülse anlegen und mit diesen Hülsenenden bzw. Enden der zweiten Hülse verschmelzen.

In der Regel wird die thermische Behandlung unter Einhaltung folgender Bedingung durchgeführt:

$$0,0175 < Q \quad e \quad \left(\frac{t}{\varsigma\ c_p\ \lambda}\right)^{1/2} < 0,5,$$

wobei Q die zugeführte Wärmemenge, pro Fläche (Stirnseite) und Zeit in $J/m^2\ s$,
e der lineare Ausdehnungskoeffizient des Stabmaterials in 1/K,
t die Zeitdauer der Wärmeeinwirkung in sec.,
$\rho$ die Dichte des Stabmaterials in $kg/cm^3$,
$C_p$ die spezifische Wärme des Stabmaterials in J/kg K, und
$\lambda$ die Wärmeleitfähigkeit des Stabmaterials in J/msK

Das erfindungsgemäße Verfahren gelingt vorzüglich, wenn Hülsen aus einem thermoplastischen Werkstoff verwendet werden, welcher im Bereich zwischen Raumtemperatur und Schmelztemperatur einen mittleren linearen Ausdehnungskoreffizienten zwischen $100 \times 10^{-6}$ und $400 \times 10^{-6}$ 1/K besitzt.

Bevorzugt werden Hülsen- und/oder Rohrenden auf eine Temperatur, die oberhalb der Schmelztemperatur des Rohr- bzw. Hülsenmaterials liegt, erhitzt.

Es hat sich bei dem erfindungsgemäßen Verfahren als vorteilhaft herausgestellt, wenn die Hülsenenden und die Rohrenden vor der thermischen Behandlung derart in der Öffnung der zweiten Hülse positioniert werden, daß die Rohrenden und die Hülsenenden die zweite Hülse 0,5 bis 3 mm überragen.

Das erfindungsgemäße Verfahren gelingt vorzüglich, wenn die Hülsenenden zu einer kompakten Packung zusammengefaßt werden, bevor ihnen Wärme zugeführt wird.

Ebenfalls hat es sich als besonders vorteilhaft herausgestellt, wenn Rohre verwendet werden, deren hydraulischer Durchmesser zwischen 0,3 und 15mm, vorzugsweise zwischen 0,5 und 7,5 mm liegt, und deren Wandstärke an der dünnsten Stelle zwischen 5 und 25%, vorzugsweise zwischen 7,5 und 17,5% des hydraulischen Durchmessers liegt.

Die Wärmezufuhr erfolgt in der Regel durch Wärmestrahlung. Bei Wärmestrahlung kann die Wärmezufuhr in einfachster Weise dadurch erreicht werden, daß eine Heizplatte von oben her auf die Rohrenden zubewegt wird, und in einem Abstand, der im Bereich von 0,5 bis 30 mm liegt, solange positioniert wird, bis die Rohrenden mit den Hülsen und die Hülsen miteinander bzw. mit der zweiten Hülse verschmolzen sind. Man kann die thermische Behandlung auch unter Vakuum oder unter einer Schutzgasathmosphäre durchführen, wobei dann der Abstand der Heizplatte in anderen Bereichen liegen kann.

Die Erfindung wird anhand eines Beispiels näher erläutert.

Die Eigenschaften der in dem nachfolgenden Beispiel verwendeten Kunststoff sind in der Tabelle zusammengestellt.

Tabelle

| Eigenschaft | Bestimmung nach | Einheit | PVDF Typ I | PVDF Typ II |
|---|---|---|---|---|
| Dichte | ASTM D 792 | g/cm$^3$ | 1,78 | 1,78 |
| «Melt flow index» | ASTM D 1238 | | | |
| –230°C, 10 kg | | g/10 min | 50 | 13 |
| –230°C, 5 kg | | g/10 min | 18 | 4 |
| –230°C, 2,16 kg | | g/10 min | 6 | 1 |
| kristalliner Schmelzpunkt | | °C | 177 | 177 |
| linearer Ausdehnungskoeffizient | ASTM D 696 | K$^{-1}$ | 106 × 10$^{-6}$ | 128 × .10$^{-6}$ |
| Wärmeleitfähigkeit | ASTM C 177 | W/m.K | 0,19 | 0,19 |
| Spezifische Wärme zwischen 0 und 100°C | | J/kg.K | 960 | 960 |
| Zugfestigkeit 5 mm/min | ASTM D 638 | MPa | 57 | 54 |
| Bruchdehnung 5 mm/min | ASTM D 638 | % | 12 | 80 |
| Modul bei 1 mm/min | ASTM D 638 | MPa | 2600 | 2400 |

Ein Bündel von 9l Röhren aus PVDF Typ I, die einen Außendurchmesser von 2 mm und eine Wandstärke von 0,l mm aufweisen, werden derart zusammengefügt, daß sie in eine sechseckige Öffnung einer Hülse aus PVDF Typ II mit einer Länge von 30 mm eingeführt werden können. Jede Seite der sechseckigen Öffnung der Hülse weist eine Länge von l2 mm auf, wobei alle Eckpunkte des Sechseckes auf einem Kreis liegen. Die Wände der sechseckigen Öffnung sind derart abgeschrägt, daß die Abschrägungen gegenüberliegender Wände einen Winkel von 90° einschließen und die Abschrägung bis zu einer Tiefe von l,25 mm reicht. Die Röhren weisen eine Länge auf, die der Länge der Hülse entsprechen und sind derart in der Hülse positioniert, daß sie stirnseitig mit der Hülse bündig eine ebene Fläche bilden. In jeder Röhre wird nun jeweils ein Rohrende einer weiteren Röhre positioniert, wobei diese Röhren aus PVDF Typ bestehen, einen Außendurchmesser von l,5 mm, eine Wandstärke von 0,25 mm und eine Porosität von 50% des Wandvolumens aufweisen. Die Rohrenden dieser zweiten Röhren werden derart positioniert, daß sie zur Stirnseite hin mit den ersten Röhren, den Hülsen bündig abschließen.

Eine runde Heizplatte mit einem Durchmesser von l00 mm, die einen Emissionskoeffizienten von 0,9 besitzt und auf eine Temperatur von 430°C erhitzt ist, wird 2 Minuten lang in einem Abstand von l0 mm über die im wesentlichen vertikal positionierten Rohr- und Hülsenenden gehalten. Nach dem Abkühlen kann man feststellen, daß alle Hülsen miteinander bzw. mit der Hülse über eine Tiefe von der Stirnseite her von l mm miteinander verschmolzen sind, wobei gleichzeitig jedes Rohrende mit dem Hülsenende über eine Tiefe von 2 mm verschmolzen ist.

Die Erfindung wird auch anhand von Figuren näher erläutert.

Es zeigen:

Figur l den Querschnitt durch ein Rohrende, welches in einer Hülse, und diese Hülse in einer zweiten Hülse positioniert ist, vor der thermischen Behandlung,

Figur 2 den Querschnitt der in Figur l dargestellten Anordnung nach der thermischen Behandlung,

Figur 3 die Draufsicht einer Anordnung von Rohrenden vor der thermischen Behandlung,

Figur 4 die Draufsicht gemäß Figur 3 nach der thermischen Behandlung.

In Figur l ist in der zweiten Hülse 3 eine Hülse 2, und in der Hülse 2 ein Rohr l jeweils derart positioniert, daß Rohrende l und Hülsenende 2 die zweite Hülse 3 um den Betrag S überragen. Zur thermischen Behandlung wird eine Heizplatte 4 in einem Abstand d von oben her auf die Rohrenden gerichtet.

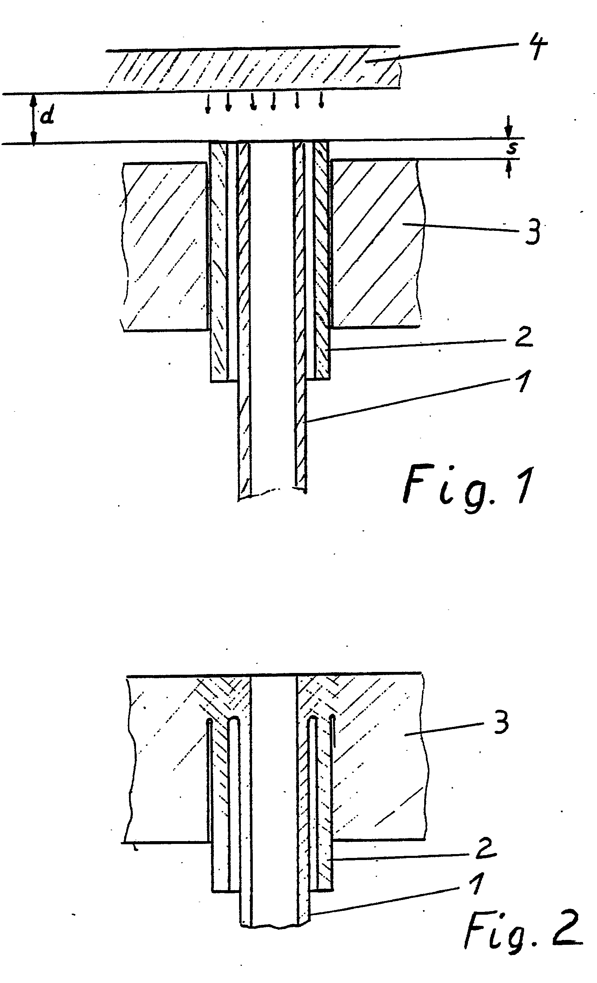

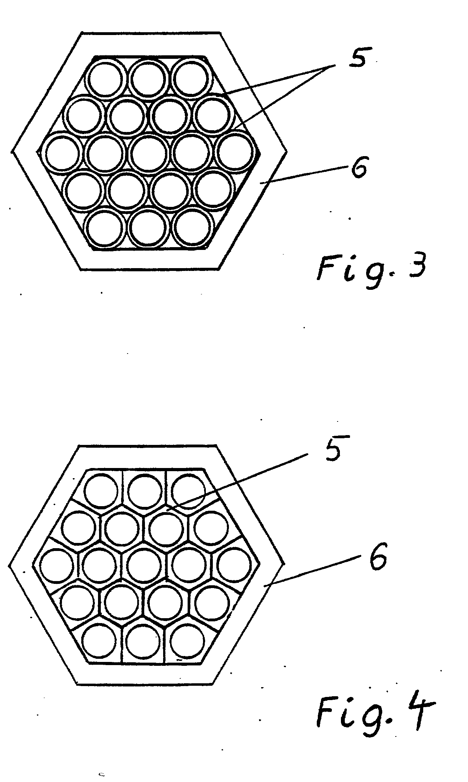

Nach der thermischen Behandlung sind die Rohrenden der Rohre l mit den Hülsenenden der Hülse 2 und die Hülsenenden der Hülse 2 mit der zweiten Hülse 3 verschmolzen, wie in Figur 2 dargestellt.

Der Einfachheit halber ist in den Figuren l und 2 nur jeweils ein Rohrende l und eine Hülse 2 dargestellt.

In den Figuren 3 und 4 ist in Draufsicht eine mögliche Anordnung von Rohr-Hülsenkombinationen 5 in einer zweiten Hülse 6 mit sechseckigem Querschnitt dargestellt, wobei zum Zwecke der Übersichtlichkeit die Rohr-Hülsenkombination 5 als ein Rohr dargestellt wurde.

In Figur 3 ist diese Anordnung gezeigt, wie sie vor der thermischen Behandlung sichtbar ist. Nach der thermischen Behandlung hat die Anordnung ein Aussehen angenommen, wie sie in Figur 4 dargestellt ist.

Ein Ende einer Rohrhülsenkombination 5, welches mit sechs benachbarten Rohrhülsenkombinationen verschmolzen ist, weist stirnseitig (in Draufsicht) eine sechseckige Kontur auf. Ein Ende einer Rohrhülsenkombination, die der zweiten Hülse 6 benachbart angeordnet ist, weist eine Kontur auf, die durch ein Fünfeck mit verschiedenen Eckwinkeln und Seitenlängen beschrieben werden kann, wobei die Fünfecke der Kontur der Enden der Rohrhülsenkombinationen derart aufgebaut sind, daß die Konturlinie zwischen zwei Rohrhülsenkombinationen mit einer zweiten Konturlinie zwischen zwei Rohrhülsenkombinationen einen Winkel von 120°, mit einer Konturlinie zwischen Rohrhülsenkombination und zweiter Hülse jedoch einen Winkel von 90° einschließen.

**Patentansprüche**

1. Wärme- und/oder Stoffaustauscher, bestehend aus mindestens einer Gruppe von Rohren aus thermoplastischem Kunststoff, bei dem die Enden der Rohre stirnseitig verschweißt sind, dadurch gekennzeichnet, daß jedes Rohrende von einer Hülse aus thermoplastischem Kunststoff, der keine Porosität oder höchstens eine Porosität von 20% des Wandvolumens aufweist, umfaßt ist, alle Rohrenden mit Hülsen einer Gruppe von einer zweiten Hülse umfaßt sind, wobei die Hülsen der Rohrenden etwa dieselbe Länge aufweisen wie die zweite Hülse, und daß stirnseitig die Rohrenden jeweils mit dem sie umfassenden Hülsenende, benachbarte Hülsenenden miteinander und außenliegende Hülsenenden mit der zweiten Hülse verschmolzen sind.

2. Wärme- und/oder Stoffaustauscher nach Anspruch 1, dadurch gekennzeichnet, daß die die Rohrenden umfassenden Hülsen aus einem thermoplastischem Kunststoff bestehen, welcher im Bereich zwischen Raumtemperatur und Schmelztemperatur einen mittleren linearen Ausdehnungskoeffizienten zwischen $100 \times 10^{-6}$ und $400 \times 10^{-6}$ 1/K besitzt.

3. Wärme- und/oder Stoffaustauscher nach Anspruch 1 oder 2, dadurch gekennzeichnet, daß die Rohrenden, die Rohrenden umfassenden Hülsen und die zweite Hülse mindestens bis zu einer Tiefe, die der dünnsten Wandstärke der Rohre entspricht, miteinander verschmolzen sind.

4. Wärme- und/oder Stoffaustauscher nach einem oder mehreren der Ansprüche 1 bis 3, dadurch gekennzeichnet, daß der Innenquerschnitt der zweiten Hülse und der Außenquerschnitt der aus Rohrenden und Hülsen bestehenden Gruppe die Form eines Sechsecks aufweist.

5. Wärme- und/oder Stoffaustauscher nach einem oder mehreren der Ansprüche 1 bis 4, dadurch gekennzeichnet, daß jede Röhrengruppe aus 7 bis 1141 Röhren besteht.

6. Wärme- und/oder Stoffaustauscher nach einem oder mehreren der Ansprüche 1 bis 5, dadurch gekennzeichnet, daß jede Hülse wie auch die zweite Hülse aus thermoplastischem Polymer besteht, welches zu den Fluorpolymeren gehört.

7. Wärme- und/oder Stoffaustauscher nach einem oder mehreren der Ansprüche 1 bis 5, dadurch gekennzeichnet, daß jede Hülse wie auch die zweite Hülse aus Polyäthylen besteht.

8. Wärme- und/oder Stoffaustauscher nach einem oder mehreren der Ansprüche 1 bis 5, dadurch gekennzeichnet, daß jede Hülse wie auch die zweite Hülse aus Polypropylen besteht.

9. Wärme- und/oder Stoffaustauscher nach einem oder mehreren der Ansprüche 1 bis 8, dadurch gekennzeichnet, daß Röhrenwerkstoff und Hülsenwerkstoff denselben oder nahezu denselben Schmelzpunkt bzw. Schmelzbereich aufweisen.

10. Wärmeaustauscher nach einem oder mehreren der Ansprüche 1 bis 9, dadurch gekennzeichnet, daß die Rohre eine Porosität von maximal 20% des Wandvolumens aufweisen.

11. Stoffaustuscher nach einem oder mehreren der Ansprüche 1 bis 10, dadurch gekennzeichnet, daß die Rohre eine Porosität von bis zu 90% des Wandvolumens aufweisen.

12. Verfahren zum Herstellen eines Wärme- und/oder Stoffaustauschers gemäß einem oder mehreren der Ansprüche 1 bis 11, dadurch gekennzeichnet, daß jedes Rohrende in jeweils einer Hülse positioniert wird, daß die Rohrenden zumindest einer Seite der Rohre jedes Rohres mit den Hülsen zusammengefaßt und derart in der zweiten Hülse positioniert werden, daß die Rohrenden und die Hülsenenden zumindest nahezu vertikal nach oben, mit der zweiten Hülse bündig oder die zweite Hülse bis zu 4 mm überragend angeordnet sind, und Rohrenden und Hülsenenden eine im wesentlichen ebene Fläche bilden, daß dann von oben her den Rohrenden soviel Wärme zugeführt wird, daß die Rohrenden mit den Hülsenenden verschmelzen und die Hülsenenden sich derart erweitern, daß diese sich an die Außenwände benachbarter Hülsen bzw. an die zweite Hülse anlegen und mit diesen Hülsenenden bzw. Enden der zweiten Hülse verschmelzen.

13. Verfahren nach Anspruch 12, dadurch gekennzeichnet, daß die thermische Behandlung unter Einhaltung folgender Bedingung durchgeführt wird:

$$0,0175 < Q \cdot e \cdot \left( \frac{t}{\varsigma \, c_p \, \lambda} \right)^{1/2} < 0,5,$$

wobei Q die zugeführte Wärmemenge, pro Fläche (Stirnseite) und Zeit in J/m²s,
e der lineare Ausdehnungskoeffizient des Stabmaterials in 1/K,
t die Zeitdauer der Wärmeeinwirkung in sec.,
ρ die Dichte des Stabmaterials in kg/cm³,
$C_p$ die spezifische Wärme des Stabmaterials in J/kg K, und
λ ie Wärmeleitfähigkeit des Stabmaterials in J/msK ist.

14. Verfahren nach Anspruch 12 oder 13, dadurch gekennzeichnet, daß Hülsen aus einem thermoplastischen Werkstoff verwendet werden, welcher im Bereich zwischen Raumtemperatur und Schmelztemperatur einen mittleren linearen Ausdehnungskoeffizienten zwischen $100 \times 10^{-6}$ und $400 \times 10^{-6} 1/K$ besitzt.

15. Verfahren nach einem oder mehreren der Ansprüche 12 bis 14, dadurch gekennzeichnet, daß Hülsen- und/oder Rohrenden auf eine Temperatur, die oberhalb der Schmelztemperatur des Rohr- bzw. Hülsenmaterials liegt, erhitzt werden.

16. Verfahren nach einem oder mehreren der Ansprüche 12 bis 15, dadurch gekennzeichnet, daß die Hülsenenden und Rohrenden vor der thermischen Behandlung derart in der Öffnung der zweiten Hülse positioniert werden, daß die Rohrenden und die Hülsenenden die zweite Hülse 0,5 bis 3 mm überragen.

17. Verfahren nach einem oder mehreren der Ansprüche 12 bis 16, dadurch gekennzeichnet, daß die Hülsenenden zu einer kompakten Packung zusammengefaßt werden, bevor ihnen Wärme zugeführt wird.

18. Verfahren nach einem oder mehreren der Ansprüche 12 bis 17, dadurch gekennzeichnet, daß Rohre verwendet werden, deren hydraulischer Durchmesser zwischen 0,3 und 15 mm liegt und deren Wandstärke an der dünnsten Stelle zwischen 5 und 25% des hydraulischen Durchmessers liegt.

19. Verfahren nach Anspruch 18, dadurch gekennzeichnet, daß der hydraulische Durchmesser zwischen 0,5 und 7,5 mm liegt.

20. Verfahren nach Anspruch 18 oder 19, dadurch gekennzeichnet, daß die Wandstärke der dünnsten Stelle zwischen 7,5 und 17,5% des hydraulischen Durchmessers liegt.

## Claims

1. Heat exchanger and/or mass exchanger, consisting of at least one group of tubes made of a thermoplastic, in which the ends of the tubes are welded on the end face, characterized in that each tube end is surrounded by a sleeve made of a thermoplastic, which has no porosity or at most a porosity of 20% of the wall volume, all tube ends with sleeves of one group are surrounded by a second sleeve, the sleeves of the tube ends having approximately the same length as the second sleeve, and that, at the end faces, the tube ends are in each case fused to the sleeve end surrounding them, adjacent sleeve ends are fused to one another and sleeve ends located on the outside are fused to the second sleeve.

2. Heat exchanger and/or mass exchanger according to claim 1, characterized in that the sleeves surrounding the tube ends consist of a thermoplastic which has a mean coefficient of linear expansion of between $100 \times 10^{-6}$ and $400 \times 10^{-6} 1/K$ in the range between room temperature and the melting point.

3. Heat exchanger and/or mass exchanger according to claim 1 or 2, characterized in that the tube ends, the sleeves surrounding the tube ends and the second sleeve are fused to one another at least to a depth which corresponds to the thinnest wall thickness of the tubes.

4. Heat exchanger and/or mass exchanger according to one or more of claims 1 to 3, characterized in that the internal cross-section of the second sleeve and the external cross-section of the group consisting of tube ends and sleeves has the shape of a hexagon.

5. Heat exchanger and/or mass exchanger according to one or more of claims 1 to 4, characterized in that each group of tubes consists of 7 to 1141 tubes.

6. Heat exchanger and/or mass exchanger according to one or more of claims 1 to 5, characterized in that each sleeve and also the second sleeve consist of a thermoplastic polymer belonging to the fluoropolymers.

7. Heat exchanger and/or mass exchanger according to one or more of claims 1 to 5, characterized in that each sleeve and also the second sleeve consist of polyethylene.

8. Heat exchanger and/or mass exchanger according to one or more of claims 1 to 5, characterized in that each sleeve and also the second sleeve consist of polypropylene.

9. Heat exchanger and/or mass exchanger according to one or more of claims 1 to 8, characterized in that the tube material and sleeve material have the same or almost the same melting point or melting range.

10. Heat exchanger according to one or more of claims 1 to 9, characterized in that the tubes have a porosity of at most 20% of the wall volume.

11. Mass exchanger according to one or more of claims 1 to 9, characterized in that the tubes have a porosity of up to 90% of the wall volume.

12. Process for producing a heat exchanger and/or mass exchanger according to one or more of claims 1 to 11, characterized in that each tube end is positioned in one sleeve in each case, that the tube ends of each tube, at least on one side of the tubes, are combined with the sleeves and are positioned in the second sleeve in such a way that the tube ends and the sleeve ends are arranged to point at least almost vertically upwards, flush with the second sleeve or projecting by up to 4 mm beyond the second sleeve, and tube ends and sleeve ends form a substantially plane surface, that such a quantity of heat is then supplied from above to the tube ends that the tube ends fuse with the sleeve ends and the sleeve ends widen in such a way that these make contact with the outer walls of adjacent sleeves or with the second sleeve and fuse to these sleeve ends or ends of the second sleeve.

13. Process according to claim 12, characterized in that the heat treatment is carried out while maintaining the following condition:

$$0{,}0175 < Q \; e \; \left( \frac{t}{\rho \, C_p \, \lambda} \right)^{1/2} < 0{,}5,$$

where $Q$ is the quantity of heat supplied, per surface area (end face) and time in $J/m^2s$,
$e$ is the coefficient of linear expansion of the rod material in $1/K$,
$t$ is the duration of the action of heat in seconds,
$\rho$ is the density of the rod material in $kg/cm^3$,
$C_p$ is the specific heat of the rod material in $J/kg\,K$, and
$\lambda$ is the thermal conductivity of the rod material in $J/msK$.

14. Process according to claim 12 or 13, characterized in that sleeves made of a thermoplastic material are used, which has a mean coefficient of linear expansion of between $100 \times 10^{-6}$ and $400 \times 10^{-6}$ $1/K$ in the range between room temperature and the melting point.

15. Process according to one or more of claims 12 to 14, characterized in that the sleeve ends and/or tube ends are heated to a temperature which is above the melting point of the tube material or sleeve material.

16. Process according to one or more of claims 12 to 15, characterized in that the sleeve ends and tube ends are positioned, before the heat treatment, in the opening of the second sleeve in such a way that the tube ends and the sleeve ends project by 0.5 to 3 mm beyond the second sleeve.

17. Process according to one or more of claims 12 to 16, characterized in that the sleeve ends are combined to give a compact package, before heat is supplied to them.

18. Process according to one or more of claims 12 to 17, characterized in that tubes are used whose hydraulic diameter is between 0.3 and 15 mm and whose wall thickness at the thinnest point is between 5 and 25% of the hydraulic diameter.

19. Process according to claim 18, characterized in that the hydraulic diameter is between 0.5 and 7.5 mm.

20. Process according to claim 18 or 19, characterized in that the wall thickness at the thinnest point is between 7.5 and 17.5% of the hydraulic diameter.

**Revendications**

1. Echangeur de chaleur et/ou de matière comprenant au moins un groupe de tubes en matière synthétique thermoplastique, dans lequel les extrémités des tubes sont soudées côté frontal, caractérisé en ce que chaque extrémité de tube est entourée d'une douille en matière synthétique thermoplastique qui ne présente pas de porosité ou qui présente une porosité au plus égale à 20% du volume de paroi, l'ensemble des extrémités de tube munies de douilles d'un groupe est entouré par une deuxième douille, les douilles des extrémités de tube présentant à peu près la même longueur que la deuxième douille, et en ce que, du côté frontal, les extrémités de tube sont à chaque fois soudées aux extrémités de douille qui les entourent, les extrémités de douille voisines sont soudées entre elles et les extrémités de douille situées à l'extérieur sont soudées à la deuxième douille.

2. Echangeur de chaleur et/ou de matière selon la revendication 1, caractérisé en ce que les douilles entourant les extrémités de tube sont constituées d'une matière synthétique thermoplastique qui présente, dans le domaine de températures situé entre la température ambiante et la température de fusion, un coefficient de dilatation linéaire moyen compris entre $100 \times 10^{-6}$ et $400 \times 10^{-6}/K$.

3. Echangeur de chaleur et/ou de matière selon la revendication 1 ou 2, caractérisé en ce que les extrémités de tube, les douilles entourant les extrémités de tube et la deuxième douille sont soudées les unes aux autres au moins jusqu'à une profondeur correspondant à l'épaisseur de paroi la plus faible des tubes.

4. Echangeur de chaleur et/ou de matière selon l'une ou plusieurs des revendications 1 à 3, caractérisé en ce que la section droite intérieure de la deuxième douille et la section droite extérieure du groupe composé des extrémités de tube et des douilles présentent la forme d'un hexagone.

5. Echangeur de chaleur et/ou de matière selon l'une ou plusieurs des revendications 1 à 4, caractérisé en ce que chaque groupe de tubes comprend 7 à 1141 tubes.

6. Echangeur de chaleur et/ou de matière selon l'une ou plusieurs des revendications 1 à 5, caractérisé en ce que chaque douille comme également la deuxième douille est constituée d'un polymère thermoplastique qui appartient aux polymères fluorés.

7. Echangeur de chaleur et/ou de matière selon l'une ou plusieurs des revendications 1 à 5, caractérisé en ce que chaque douille comme également la deuxième douille est constituée de polyéthylène.

8. Echangeur de chaleur et/ou de matière selon l'une ou plusieurs des revendications 1 à 5, caractérisé en ce que chaque douille comme également la deuxième douille est constituée de polypropylène.

9. Echangeur de chaleur et/ou de matière selon l'une ou plusieurs des revendications 1 à 8, caractérisé en ce que le matériau des tubes et le matériau des douilles présentent le même ou presque le même point de fusion ou domaine de fusion.

10. Echangeur de chaleur selon l'une ou plusieurs des revendications 1 à 9, caractérisé en ce que les tubes présentent une porosité au plus égale à 20% du volume de paroi.

11. Echangeur de matière selon l'une ou plusieurs des revendications 1 à 10, caractérisé en ce que les tubes présentent une porosité de jusqu'à 90% du volume de paroi.

12. Procédé de fabrication d'un échangeur de chaleur et/ou de matière selon l'une ou plusieurs des revendications 1 à 11, caractérisé en ce que chaque extrémité de tube est positionnée à chaque fois dans une douille, en ce que les extrémités de tube de chaque tube, au moins d'un côté des tubes, sont groupées avec les douilles et positionnées dans la deuxième douille de telle manière que les extrémités de tube et les extrémités de douille sont disposées au moins à peu près verticalement vers le haut et arrivent au ras de la deuxième douille ou dépassent de la deuxième douille de jusqu'à 4 mm, et les extrémités de tube et extrémités de douille forment une surface pratiquement plane, en ce que, ensuite, on apporte par le haut aux extrémités de tube une quantité de chaleur suffisante pour que les extrémités de tube se soudent aux extrémités de douille et que les extrémités de douille se dilatent de telle manière qu'elles s'appliquent sur les parois extérieures des douilles voisines ou sur la deuxième douille et se soudent à ces extrémités de douille ou extrémités de la deuxième douille.

13. Procédé selon la revendications 12, caractérisé en ce qu'on effectue le traitement thermique en respectant la condition suivante:

$$0,0175 < Q\, e\, \left(\frac{t}{\rho\ C_P\ \lambda}\right)^{\frac{1}{2}} < 0,5 \quad,$$

où Q désigne la quantité de chaleur apportée par unité de surface (côté frontal) et unité de temps, en $J/m^2.s$,

e désigne le coefficient de dilatation linéaire du matériau de la barre par °K,

t désigne la durée d'action de la chaleur en secondes,

$\rho$ désigne la masse volumique du matériau de la barre en $kg/cm^3$,

$C_P$ désigne la chaleur spécifique du matériau de la barre en J/kg.K, et

$\lambda$ désigne la conductibilité thermique du matériau de la barre en J/m.s.K.

14. Procédé selon la revendication 12 ou 13, caractérisé en ce que l'on utilise des douilles constituées d'un matériau thermoplastique qui présente, dans le domaine de températures situé entre la température ambiante et la température de fusion, un coefficient de dilatation linéaire moyen compris entre $100 \times 10^{-6}$ et $400 \times 10^{-6}$/K.

15. Procédé selon l'une ou plusieurs des revendications 12 à 14, caractérisé en ce que l'on chauffe les extrémités de douille et/ou de tube à une température supérieure à la température de fusion du matériau de tube ou de douille.

16. Procédé selon l'une ou plusieurs des revendications 12 à 15, caractérisé en ce que, avant le traitement thermique, les extrémités de douille et extrémités de tube sont positionnées dans l'ouverture de la deuxième douille de telle manière que les extrémités de tube et les extrémités de douille dépassent de la deuxième douille de 0,5 à 3 mm.

17. Procédé selon l'une ou plusieurs des revendications 12 à 16, caractérisé en ce que les extrémités de douille sont groupées en un paquet compact avant que de la chaleur leur soit apportée.

18. Procédé selon l'une ou plusieurs des revendications 12 à 17, caractérisé en ce que l'on utilise des tubes dont le diamètre hydraulique a une valeur située entre 0,3 et 15 mm et dont l'épaisseur de paroi, à l'endroit le plus mince, a une valeur comprise entre 5 et 25% du diamètre hydraulique.

19. Procédé selon la revendication 18, caractérisé en ce que le diamètre hydraulique a une valeur comprise entre 0,5 et 7,5 mm.

20. Procédé selon la revendication 18 ou 19, caractérisé en ce que l'épaisseur de paroi, à l'endroit le plus mince, a une valeur comprise entre 7,5% et 17,5% du diamètre hydraulique.

Fig. 1

Fig. 2

EP 0 243 575 B1

Fig. 3

Fig. 4